# FASCICULE DE BREVET EUROPEEN

(11) **EP 3 260 284 B1**
(45) Date de publication et mention de la délivrance du brevet: **16.02.2022**
(21) Numéro de dépôt: 17173197.9
(22) Date de dépôt: 29.05.2017
(51) Int. Cl.: B29C 73/02, B29C 73/34, B64F 5/40, B29L 31/30

(54) **PROCEDE DE REPARATION D'UN RADOME UTILISANT LE RADOME COMME ENCEINTE DE CHAUFFAGE ET OUTIL POUR SA MISE EN OEUVRE**
VERFAHREN ZUR REPARATUR EINES RADOMS, BEI DEM DAS RADOM ALS HEIZKAMMER EINGESETZT WIRD, UND WERKZEUG ZU SEINER UMSETZUNG
METHOD FOR REPAIRING A RADOME USING THE RADOME AS A HEATING CHAMBER AND TOOL FOR IMPLEMENTING SAME

(30) Priorité: 20.06.2016 FR 1655700
(43) Date de publication de la demande: 27.12.2017
(73) Titulaire: Airbus Operations S.A.S., 31060 Toulouse (FR); Airbus (S.A.S.), 31700 Blagnac (FR)
(72) Inventeur: FERRER, Guillaume, 31500 TOULOUSE (FR); MARECHAL, Bruno, 44860 SAINT AIGNAN DE GRAND LIEU (FR); MARTY, Jean-Claude, 31000 TOULOUSE (FR); VIDAL, Julien, 44200 NANTES (FR)
(74) Mandataire: Gicquel, Olivier Yves Gérard

(56) Documents cités:
- EP-A1- 2 371 523
- EP-A1- 2 881 246
- FR-A1- 2 693 147
- US-A- 4 808 253

## Description

La présente invention concerne le domaine des procédés de réparation de radôme et notamment de radôme d'aéronef en matériau composite ainsi que de l'outillage utilisé pour réaliser ce type de réparation.

### DOMAINE TECHNIQUE

La plupart des aéronefs et en particulier les avions de transport commerciaux comprennent un radôme situé en pointe avant. Le radôme a notamment pour fonction de protéger un radar et présente une structure en matériau perméable aux ondes électromagnétiques et par exemple en matériau composite. La structure du radôme peut se trouver endommager par des incidents de types divers tels qu'un impact d'oiseau ou la grêle et présenter un enfoncement, une déchirure, des rayures ou tout autre détérioration nécessitant une réparation.

### TECHNIQUE ANTERIEURE

La demande de brevet FR2953812 montre un exemple de réparation d'un fuselage en composite. Comme présenté dans la demande, il est nécessaire de réaliser une découpe autour de la zone détériorée pour la retirer et de placer un doubleur au niveau de l'ouverture pratiquée par découpe que l'on fixe par cuisson dans le cas d'une résine thermodurcissable.

Dans le cas du radôme, pour réaliser la polymérisation, on retire le radôme de l'aéronef et on le place dans une enceinte de chauffage telle qu'un autoclave, une étuve ou autre. Or le cadre se trouvant à l'extrémité libre du radôme en composite et permettant la fixation avec le fuselage de l'aéronef ainsi que d'autres éléments du radôme sont réalisés dans certains aéronefs en matériau métallique, matériau qui ne supporte pas la température nécessaire à la polymérisation de la résine (plus de 60°C).

Cela implique de démonter toutes les parties métalliques du radôme et en particulier le cadre réalisant l'interface avec le fuselage avant de procéder à la cuisson. Il en résulte une augmentation importante du temps de réparation due uniquement au démontage de ces parties métalliques et un procédé de réparation lourd et contraignant nécessitant notamment le transport du radôme et l'accès à des enceintes de chauffage distantes.

Le document EP2881246 divulgue un procédé de réparation d'un panneau courbe comportant une zone endommagée. Le procédé consiste à placer la zone endommagée dans une chambre dont une première partie couvre un côté de la zone endommagée et une seconde partie couvre le côté opposé, les deux parties définissant ensemble une chambre qui entoure la zone endommagée. Un flux de gaz chaud est utilisé pour chauffer la zone endommagée, percée à cet effet, à l'intérieur de la chambre et la dépolymériser afin d'éliminer la matrice. Le procédé consiste ensuite à introduire de la résine dans l'espace laissé par la matrice éliminée.

La présente invention a pour but de proposer un procédé de réparation et un outil de mise en œuvre de ce procédé permettant de pallier au problème du temps et de la difficulté pour retirer l'ensemble des pièces métalliques d'un radôme ainsi que pour transporter le radôme et accéder à des enceintes de chauffage adaptées.

### EXPOSE DE l'INVENTION

Pour ce faire, la présente invention concerne un procédé de réparation d'un radôme comprenant un panneau présentant une double courbure formant dôme, ledit panneau comportant au moins une zone endommagée caractérisé en ce qu'il comprend les étapes suivantes :
- fermeture d'un espace intérieur du panneau par un capot pour former une enceinte, appelée enceinte de réparation, la surface du panneau formant ladite enceinte de réparation contenant ladite zone endommagée ;
- chauffage de l'espace intérieur à ladite enceinte de réparation formant ainsi une enceinte de chauffage permettant la cuisson attendue pour la réparation de la zone endommagée.

Le procédé consiste en l'utilisation du radôme proprement dit comme enceinte de chauffage de manière à éviter le recours à un autoclave et le démontage de certaines parties du radôme ne supportant pas la température de cuisson nécessaire.

Le procédé de réparation présente au moins l'une des caractéristiques optionnelles suivantes, prises isolément ou en combinaison.

Le procédé comprend une étape de préparation de ladite zone endommagée par découpe et insertion d'éléments de remplacement dans les découpes opérées nécessitant une cuisson pour la fixation desdits éléments au panneau.

L'étape de chauffage comprend la détection d'au moins une température à l'intérieur de l'enceinte de chauffage pour contrôler le chauffage de ladite enceinte de manière à atteindre une température de réparation.

Le procédé comprend une étape de brassage de l'air contenu dans ladite enceinte.

Le procédé comprend une étape de déploiement d'un joint déployable entre le capot et le panneau permettant la fermeture hermétique de ladite enceinte de réparation.

Il comprend une étape de maintien du capot par la mise en place d'au moins une cale longiligne dont une extrémité prend appui sur la face externe du capot et dont l'autre extrémité prend appui sur une structure fixe.

Il comprend une étape de mise en place de moyens de soutien du panneau pour faciliter l'accès à l'enceinte de chauffage.

Il comprend une étape de mise en place d'une couverture isolante sur au moins une partie de la face externe du panneau de radôme.

La présente invention concerne également l'outil de réparation d'un radôme comprenant un panneau présentant une double courbure formant dôme, ledit panneau présentant au moins une zone endommagée caractérisé en ce que l'outil comprend le panneau proprement dit, un capot permettant de fermer un espace intérieur du panneau de radôme pour former une enceinte, appelée enceinte de réparation, la surface du panneau de radôme formant ladite enceinte de réparation contenant ladite zone endommagée et des moyens de chauffage permettant de chauffer l'espace intérieur de ladite enceinte de réparation formant ainsi une enceinte de chauffage permettant la cuisson attendue pour la réparation de la zone endommagée.

L'outil présente au moins l'une des caractéristiques optionnelles suivantes, prises isolément ou en combinaison.

Le capot est formé d'un seul bloc et présente une forme dont le contour correspond au contour intérieur du panneau contre lequel il doit s'appliquer.

Les moyens de chauffage se présentent sous la forme d'un dispositif de génération d'air chaud susceptible d'être intégré de manière amovible au capot et de le traverser par un orifice prévu à cet effet.

L'outil comprend des moyens de brassage d'air.

Le bord périphérique libre du capot comprend un joint déployable.

Des moyens de détection de température sont prévus à l'intérieur de l'enceinte de réparation, les moyens de détection étant couplés à un centre de commande des moyens de chauffage de l'enceinte de réparation.

L'outil comprend au moins une cale longiligne dont une extrémité prend appui sur la face externe du capot et dont l'autre extrémité prend appui sur une structure fixe.

### DESCRIPTION SOMMAIRE DES DESSINS

D'autres buts, avantages et caractéristiques de l'invention apparaîtront à la lecture de la description qui va suivre du procédé et de l'outil de réparation selon l'invention, donné à titre d'exemple non limitatif en référence aux dessins ciannexés dans lesquels :
- la figure 1 représente une vue schématique simplifiée en coupe d'un outil de réparation du radôme selon la présente invention ;
- la figure 2 représente une vue schématique simplifiée en coupe d'une autre forme de réalisation d'un outil de réparation selon la présente invention ;
- les figures 3 et 4 représentent une vue en coupe schématique partielle agrandie et détaillée de la zone entourée en pointillés sur la figure 1 d'une forme de réalisation du capot de l'outil de réparation selon la présente invention.

### MANIERE DE REALISER L'INVENTION

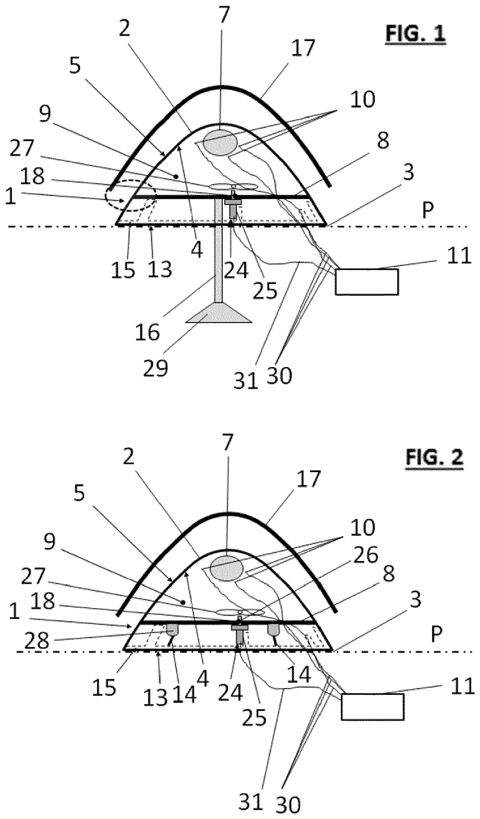

Comme le montrent les figures 1 et 2, la présente invention se rapporte à un procédé de réparation d'un radôme 1 et plus particulièrement dans l'exemple décrit ci-dessous d'un radôme d'aéronef.

Le radôme 1 comprend un panneau 2 en matériau perméable aux ondes électromagnétiques et par exemple en matériau composite. Le panneau 2 présente une double courbure de manière à former une concavité en forme de dôme. Le bord 3 périphérique libre du radôme 1 est joint, en général de manière articulé, par tout type de moyen connu au reste du fuselage de l'aéronef. Dans la description qui suit, on considère que le radôme a été démonté et retiré de l'aéronef comme montré sur les figures 1 et 2. Le panneau 2 présente une face 4 interne et une face 5 externe. La face 4 interne du panneau est creuse. Dans les formes illustrées sur les figures 1 et 2, le bord 3 périphérique libre ou au moins une partie du bord appartient à un plan P : de ce fait, le radôme peut reposer contre une surface plane et en particulier sur le sol par son bord 3 périphérique ou la partie appartenant au plan P de celui-ci, la partie en question du bord 3 étant de dimension suffisamment importante pour ce faire.

Le radôme 1 ne sera pas décrit plus en détail : il peut comprendre d'autres composants tels que des bandes parafoudre ou autres dont la description n'est pas nécessaire pour présenter le procédé et l'outil de réparation.

Le panneau 2 du fait de son exposition à l'extrémité avant de l'aéronef subit des endommagements qu'il convient de réparer.

Le procédé de réparation comprend plusieurs étapes dont la première consiste à reconstruire le panneau 2 du radôme 1 sur une zone 7 endommagée. Pour ce faire, une découpe selon un mode opératoire de type connu est pratiquée pour retirer la zone 7 endommagée et des éléments de remplacement viennent combler la découpe opérée. De manière connue, et selon un exemple illustratif, le panneau 2 composite résulte de la superposition d'un certain nombre de plis du côté de la face 4 interne, d'une couche de nid d'abeille puis d'un certain nombre de plis du côté de la face 5 externe. Selon un exemple de mode opératoire, toujours à titre illustratif, les plis du panneau 2 sont découpés, les découpes étant de taille décroissante de la face 4 interne à la face 5 externe. La couche de nid d'abeille est également découpée selon le même contour que le pli le plus proche de ladite couche se trouvant du côté de la face 5 externe Les plis et la couche de nid d'abeille sont ensuite reconstitués : une première pièce composite de réparation dont la forme du contour est identique à celle du contour de la découpe du pli se trouvant sur la face 5 externe et de dimension très légèrement inférieure est inséré à l'intérieur de la dite découpe. Une deuxième pièce de dimension supérieure à la précédente pièce dont la forme du contour est identique à la forme du contour de la découpe du pli le plus proche du précédent et de dimension très légèrement inférieure est inséré à l'intérieur de la découpe de ce deuxième pli et ainsi de suite jusqu'à la couche de nid d'abeille. Une portion de nid d'abeille de réparation est insérée à l'intérieur de la découpe de la couche de nid d'abeille : une couche de colle est prévue sur la face inférieure et supérieure de la couche de nid d'abeille pour la liaison avec les plis les plus proches. On reprend ensuite l'insertion de pièces dans les découpes des plis jusqu'à la face 4 interne.

Une fois la zone 7 reconstruite, le procédé comprend une étape de chauffage du radôme et plus particulièrement de la zone 7 endommagée pour assurer la cuisson permettant la fixation des pièces de réparation et portion de nid d'abeille de réparation au panneau 2 de radôme découpé.

Le procédé de réparation utilise la concavité du radôme 1 pour en faire une enceinte de chauffage. Ainsi on ferme un espace intérieur du dôme formé par le panneau 2 de radôme par un capot 8 isolant pour former une enceinte 9, appelée enceinte de réparation. La surface du panneau 2 formant ladite enceinte 9 de réparation contient la zone 7 endommagée à réparer et ne contient pas le bord 3 périphérique libre. Selon la forme illustrée, le capot 8 isolant est formé d'un seul bloc ce qui facilite son déplacement et sa mise en place à l'intérieur du radôme. Le contour du capot 8 présente une forme correspondante à celle du contour intérieur du radome sur lequel il s'applique. Ainsi il suffit de saisir le capot, de le déplacer pour l'introduire à l'intérieur du radome contre la face 4 interne duquel il vient s'appliquer pour former l'enceinte de chauffage.

Une fois l'enceinte 9 de réparation fermée par le capot 8, on procède au chauffage de l'espace intérieur à ladite enceinte : l'enceinte de réparation devient une enceinte de chauffage. On procède au chauffage à une température de cuisson telle que la surface du panneau 2 faisant partie de l'enceinte de réparation ne se trouve pas impactée contrairement à la zone 7. La polymérisation d'un panneau en composite s'opère à une température appelée T1 de cuisson. Pour réaliser la réparation, il n'est pas nécessaire d'atteindre la température T1 de cuisson. Il suffit d'atteindre une température T2 inférieure à la température T1 de cuisson et de la maintenir pendant un temps plus long que celui nécessaire pour la cuisson. Ainsi le mode opératoire utilisé pour réparer un panneau dans les enceintes de chauffage de type autoclave ou étuve consiste à chauffer la zone 7 endommagée à une température T2 de réparation inférieure à la température T1 de cuisson et pendant un temps plus long que celui nécessaire pour la polymérisation d'un panneau. Le même mode opératoire est utilisé dans l'enceinte 9 de chauffage. Le panneau 2 dans sa globalité peut ainsi résister à la chaleur pour assurer sa fonction d'enceinte 9 de chauffage.

De plus, le bord 3 périphérique libre étant extérieur à l'enceinte 9 de chauffage, il n'est pas nécessaire de démonter le cadre 15 métallique ou tous les autres éléments qui se trouvent fixés sur le bord 3 pour assurer l'interface avec le reste du fuselage ou sur la surface du panneau 2 comprise entre le bord périphérique libre et le capot. Le procédé permet ainsi d'utiliser le radôme proprement dit comme enceinte de chauffage.

L'étape de chauffage peut comprendre la détection d'au moins une température à l'intérieur de l'enceinte 9 de chauffage pour contrôler le chauffage de ladite enceinte à la température T2 de réparation. Au moins un capteur 10 de mesure de température est installé sur la face 4 interne du panneau 2 appartenant à l'enceinte 9 ou du capot 8 et transmet la (ou les) température(s) détectée(s) à un centre 11 de commande extérieur à l'enceinte 9 de chauffage. Un opérateur peut ainsi visualiser la température atteinte en différents endroits de l'enceinte 9 de chauffage, en vérifier la valeur et l'homogénéité si plusieurs températures ont été mesurées et réguler le chauffage si nécessaire. Cette régulation peut également être réalisée automatiquement. L'utilisation de plusieurs capteurs 10 permet de vérifier l'homogénéité de la température dans l'enceinte 9. Elle a aussi pour fonction d'assurer la mesure en cas de panne d'un des capteurs ou de déceler la défaillance d'un capteur au travers de mesures fausses isolées. Les capteurs sont disposés à proximité de la zone 7 endommagée. En effet, il est nécessaire d'atteindre la température T2 de réparation au niveau de la zone 7 mais pas indispensable partout ailleurs dans l'enceinte 9.

Le procédé peut comprendre une étape de brassage de l'air contenu dans l'enceinte 9 de réparation. Selon une forme de réalisation particulière, le brassage de l'air s'enclenche avec le démarrage du chauffage mais il peut démarrer avant ou après le début du chauffage. Le brassage de l'air a pour but d'homogénéiser la répartition de l'air chaud dans l'enceinte de chauffage pour assurer les mêmes conditions de polymérisation sur toute la surface de la zone 7 endommagée.

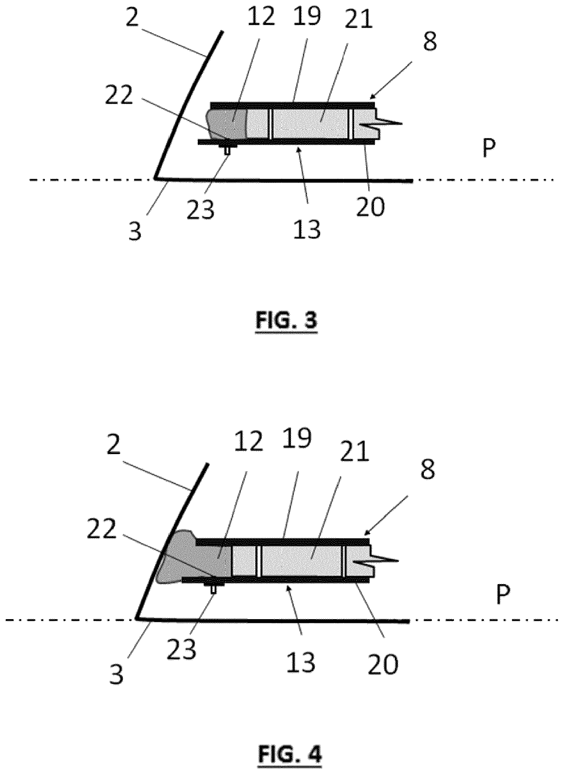

Le procédé peut comprendre une étape de déploiement d'un joint 12 déployable entre le capot 8 et le panneau 2 permettant la fermeture hermétique de ladite enceinte 9 de réparation. Une fois le capot en place, le déploiement du joint 12 est activé par soufflage, gonflage, actionnement mécanique ou tout autre type d'action le permettant. Le déploiement du joint permet d'assurer l'isolation de la jointure entre le capot 8 et le panneau 2. Dans la forme de réalisation illustrée sur les figures 4 et 5, le bord périphérique du capot 8 est pourvu du joint 12. Le joint 12 se déploie par déformation et plus précisément dans la forme de réalisation illustrée par gonflage. Le joint se déploie vers l'extérieur du capot 8 soit dans la direction du panneau 2 une fois le capot installé. Le joint s'applique sur le panneau 2 et assure une fermeture hermétique de l'enceinte 9 de chauffage. Une fois la réparation réalisée, il est possible de réinsérer le joint dans le capot manuellement ou par aspiration.

Dans le cas d'un capot 8 dont les dimensions ne sont pas en adaptées à celles du radôme 1 pour permettre la formation d'une enceinte contenant la zone 7 endommagée, l'utilisation d'un joint 12 déployable peut permettre l'adaptation du capot aux diverses formes ou dimensions de panneaux 2 de radôme. Le capot 8 n'a donc pas besoin de présenter des dimensions en parfaite correspondance avec celle du panneau 2. Grâce à l'utilisation d'un joint 12 déployable, il convient à plusieurs types, formes, tailles de radôme.

Le procédé présente une étape de maintien du capot en place pour former une enceinte 9 de chauffage. Cette étape peut être combinée à l'étape précédente de fermeture hermétique de l'enceinte : en effet, le joint peut présenter une fonction d'adhérence telle qu'il maintient le capot en place.

L'étape de maintien peut également précéder ou suivre l'étape de déploiement du joint. Le maintien du capot en place peut être réalisé de diverses manières.

Selon une forme de réalisation possible, le procédé consiste à utiliser des systèmes amovibles de fixation de type scotch, « VELCRO » (marque déposée), vis/écrou ou autre. Ces systèmes joignent la face 13 externe du bord périphérique libre du capot à la face interne 4 du panneau.

Selon une forme de réalisation particulière illustrée sur la figure 2, le procédé consiste en la mise en place d'un système amovible de fixation sous la forme d'au moins une cale 14 longiligne dont une extrémité prend appui sur la face 13 externe du capot et dont l'autre extrémité prend appui sur une structure fixe pour permettre le maintien du capot. La structure fixe peut être de toute nature le sol, un mur, une plate-forme voire même le radôme lui-même.

Selon la forme de réalisation illustrée, la structure fixe consiste en la structure du radôme proprement dit. Le procédé peut donc être réalisé n'importe où, sur n'importe quelle surface. La cale prend appui par exemple sur le cadre 15 métallique fixé au niveau du bord 3 périphérique libre du panneau 2 pour maintenir par son autre extrémité le capot auquel il est fixé. Le nombre de cales est déterminé suivant les besoins, les cales étant réparties de manière équilibrée sur la surface du capot.

Les systèmes amovibles de fixation peuvent se combiner ; on peut utiliser par exemple du scotch pour assurer un premier maintien renforcé par l'ajout de cales.

Un accès en dessous du dôme du panneau 2 facilite la mise en œuvre du procédé de réparation. Le dôme peut donc au lieu de reposer sur une surface être suspendu ou fixé de manière à laisser un accès libre à l'enceinte de chauffage. Le procédé comprend une étape de mise en place de moyens 16 de soutien du panneau 2 pour faciliter l'accès à l'enceinte 9 de chauffage.

Selon la forme de réalisation représentée sur la figure 1, le panneau 2 est maintenu en hauteur à l'aide d'un support 16. De cette manière l'outil est posé au sol au moyen du support 16 et il suffit d'approcher le radôme et de le poser sur l'outil. Dans la forme de réalisation illustrée sur la figure 1, le support se présente sous la forme d'un pied unique central évasé à son extrémité basse pour prendre appui de manière stable sur la surface sur laquelle il repose. Le pied et la base évasée peuvent présenter des formes variées comme il sera décrit plus loin. Le pied est ici unique mais à l'image d'une table, le support peut comprendre plus d'un pied ou se présenter sous tout autre type de forme.

Le procédé peut présenter une étape de mise en place d'une couverture 17 isolante thermiquement pour recouvrir la face 5 externe du panneau 2 de radôme. La couverture 17 isolante accélère la montée en température et renforce l'isolation thermique de l'enceinte 9 de chauffage.

Le procédé de réparation offre ainsi les avantages d'éviter le recours à des moyens lourds tels qu'autoclave ou étuve, d'avoir à démonter des composants du radôme tels que le cadre 15 se trouvant au niveau du bord périphérique libre du panneau 2, de transporter le radôme sur de longues distances. Le procédé peut être opéré rapidement, simplement et en tout lieu. Il peut s'appliquer à tous les types de radôme.

Le procédé de réparation nécessite l'utilisation d'un outil présenté dans ces grands principes avec la description précédente du procédé et de manière plus détaillée dans ce qui suit.

Dans la forme de réalisation illustrée sur les figures 1 et 2, l'outil comprend le capot 8 permettant de refermer le panneau 2 du radôme. Le capot 8 présente donc une forme en correspondance avec celle du panneau 2 et plus précisément du dôme formé par la face 4 interne du panneau 2. Si le panneau 2 est hémi sphérique, le capot 8 se présente sous la forme d'un disque. Le capot comporte un orifice 18 pratiqué par exemple au centre de sa surface, à savoir pour un disque au centre du disque. L'orifice 18 peut être prévu ailleurs qu'au centre du capot (figures 1 et 2).

Selon les formes illustrées sur les figures 1 et 2, le capot 8 présente une surface plane dont le bord 3 périphérique libre vient en contact avec la face 4 interne du panneau 2. Dans la forme de réalisation illustrée sur les figures 3 et 4, le capot comprend deux panneaux, un panneau 19 supérieur et un panneau 20 inférieur en matériau composite. Les deux panneaux sont séparés par une couche de mousse 21 isolante thermiquement.

Il est possible de prévoir un capot ne présentant aucune surface plane. On pourrait par exemple prévoir une surface courbe permettant de diminuer le volume de l'enceinte de chauffage. Cependant comme montré sur les figures 1 et 2, la surface plane est dans de nombreux cas de configuration la surface la plus optimisée pour faciliter l'installation.

Comme le montrent les figures 3 et 4, et comme vu précédemment, le bord périphérique du capot est pourvu du joint 12 déployable. Le joint 12 peut être déployé par déformation, rétraction mécanique de type coulissement ou autre. Dans la forme de réalisation illustrée, le déploiement se fait par déformation et plus précisément par gonflage. Le joint 12 se présente sous la forme d'une chambre à air logée à l'intérieur du bord périphérique du capot sur tout le périmètre. Une entrée 22 d'air est prévue dans la chambre à air dont l'accès est réalisé par une valve 23 accessible depuis la face 13 externe du capot. En réalisant un gonflage au niveau de ladite valve 23, la chambre à air se remplit d'air et se déforme. Les bords périphériques extérieurs du panneau 20 inférieur et du panneau 19 supérieur ne sont pas joints de manière à laisser l'accès libre à l'expansion de la chambre à air hors du capot, vers l'extérieur de celui-ci. Selon une forme de réalisation illustrative, des brides en « VELCRO » (marque déposée) peuvent être prévues sur le pourtour du capot pour éviter que le joint 12 ne ressorte de son logement pendant son stockage ou son transport. Les brides sont libérées lors de la mise en place du capot. La taille de la chambre à air est telle qu'une fois gonflée, elle vienne en contact et s'appliquer voire se coller par pression à la face interne du panneau 2 pour assurer la fermeture hermétique de l'enceinte de réparation. La forme et la dimension du capot sont déterminés par rapport à la forme et à la taille des radômes sur lesquels il est prévu qu'il s'applique et par rapport à la présence et la forme dudit joint. Il peut également être prévu de réaliser une aspiration par la valve 23 à l'aide d'un dispositif d'aspiration de type connu pour remettre le joint 12 à l'intérieur du capot.

L'outil de réparation comprend des moyens 24 de chauffage permettant de chauffer l'espace intérieur de ladite enceinte 9 de réparation formant l'enceinte de chauffage et permettant la cuisson attendue pour la réparation de la zone 7 endommagée. Comme le montrent les figures 1 et 2, les moyens 24 de chauffage se présentent sous la forme d'un dispositif 25 de génération d'air chaud susceptible d'être intégré de manière amovible au capot. Les moyens de chauffage se présentent par exemple sous la forme d'un pistolet 25 à air chaud dont le conduit 26 expulsant l'air chaud est introduit dans l'orifice 18 prévu au centre du capot. Le dispositif 25 de génération d'air chaud est fixé de manière amovible au capot par exemple à l'aide de brides. Tout autre type de fixation peut être utilisé.

L'outil comprend des moyens de brassage d'air. Dans la forme de réalisation illustrée sur la figure 1, les moyens de brassage se présentent sous la forme d'un ventilateur 27 électrique. Les moyens de brassage pourrait également se présenter sous la forme d'un déflecteur mécanique. Il peut être disposé et fixé à l'intérieur de l'enceinte 9 par tout type de moyen connu. Dans l'exemple illustré, l'hélice du ventilateur 9 est associée au conduit 26 d'expulsion du dispositif de génération d'air chaud. Ainsi il est au plus près de ce dernier et permet un brassage optimisé.

L'hélice présente une forme telle qu'elle agit également en déflecteur. Le déflecteur peut aussi être indépendant de l'hélice et par exemple se présenter sous la forme d'une tôle perforée placée à distance de la sortie des moyens de chauffage et dans l'exemple décrit du pistolet à air chaud. Le déflecteur permet d'éviter un point chaud au droit du pistolet, de diffuser de manière optimisée et homogénéisée la température dans l'enceinte de chauffage.

Comme vu précédemment, l'outil de réparation du radôme comprend au moins une cale 14 longiligne dont une extrémité prend appui sur la surface externe du capot et dont l'autre extrémité prend appui sur une structure fixe pour permettre le maintien du capot. Dans les formes de réalisation illustrées sur les figures 1 et 2, la structure fixe est le cadre 15 fixé sur le bord 3 périphérique libre du panneau 2. La cale 14 longe la face interne du panneau 2 entre le cadre et la face externe du capot. Les cales sont réparties tout autour de la périphérie du capot. Les cales sont fixées à la face externe du capot à l'aide de tout système de jointure 28 articulé de type connu.

Pour améliorer l'isolation, il est également possible de recouvrir le radôme d'une couverture 17 isolante. Celle-ci doit être de forme telle qu'elle recouvre entièrement la face externe du panneau 2 de radôme ou au moins jusqu'au niveau du capot 8. La couverture 17 est faite d'un matériau isolant de type connu.

L'outil de réparation peut comprendre des moyens 16 de soutien pour faciliter l'accès à l'enceinte de chauffage. Ces moyens ne sont pas nécessaires. En effet, une fois l'ensemble des composants de l'outil en place, le radôme peut reposer sur le sol ou toute autre surface et le pilotage du chauffage est assuré par l'intermédiaire du centre 11 de commande susceptible d'être extérieur et distant du radôme.

La figure 1 illustre une forme de réalisation des moyens de soutien. Les moyens de soutien se présentent sous la forme d'un support 16 de type pied de table. Dans l'exemple, un seul pied 16 est prévu prenant à une extrémité appui sur le sol par l'intermédiaire d'une base 29 de stabilisation et à l'autre extrémité supportant le capot en son centre. Le pied est fixé de manière amovible ou pas au capot. Le pied est par exemple de forme cylindrique, de section circulaire, rectangulaire ou autre. La base 29 est par exemple de forme conique, pyramidale ou autre. Pour faciliter la mise en place des moyens 24 de chauffage et un emplacement central de ces derniers, le support 16 peut présenter plus d'un pied permettant de les répartir autour du centre du capot, laissant le centre libre pour l'installation des moyens de chauffage.

L'outil de réparation peut comprendre des moyens de détection de température prévus à l'intérieur de l'enceinte de réparation, les moyens de détection étant couplés au centre 11 de commande des moyens de chauffage de l'enceinte de réparation. Les moyens de détection se présentent sous la forme de capteurs 10 de mesure tels que des thermocouples. Les moyens de détection comprennent au moins un capteur. Le ou les capteurs 10 sont disposés à l'intérieur de l'enceinte de réparation/chauffage et plus particulièrement comme l'illustre la figure 1, sur la face interne du radôme. Dans l'exemple de la figure 1, trois capteurs sont représentés. Les capteurs sont reliés au centre de commande extérieur au radôme par une liaison 30 par exemple de type filaire que l'on peut faire passer par l'orifice central, par l'extérieur du capot (entre le capot et le panneau 2 de radôme) ou encore par des orifices complémentaires prévus dans le capot.

Le centre 11 de commande extérieur se présente sous la forme d'une valise de visualisation des données mesurées et de commande des moyens de chauffage et de brassage/déflection de l'air contenu dans l'enceinte de chauffage. Pour ce faire, le centre de commande est également relié par une liaison 31 par exemple de type filaire aux moyens de chauffage et aux moyens de brassage d'air et de déflexion.

## Revendications

1. - Procédé de réparation d'un radôme (1) comprenant un panneau (2) présentant une double courbure formant dôme, ledit panneau comportant au moins une zone (7) endommagée **caractérisé en ce qu'**il comprend les étapes suivantes :
- fermeture d'un espace intérieur du panneau (2) par un capot (8) pour former une enceinte (9), appelée enceinte de réparation, la surface du panneau (2) formant ladite enceinte (9) de réparation contenant ladite zone (7) endommagée ;
- chauffage de l'espace intérieur à ladite enceinte (9) de réparation formant ainsi une enceinte de chauffage permettant la cuisson attendue pour la réparation de la zone endommagée.

2. - Procédé de réparation d'un radôme selon la revendication 1, **caractérisé en ce qu'**il comprend une étape de préparation de ladite zone (7) endommagée par découpe et insertion d'éléments de remplacement dans les découpes opérées nécessitant une cuisson pour la fixation desdits éléments au panneau (2).

3. - Procédé de réparation d'un radôme selon l'une des revendications 1 ou 2, **caractérisé en ce que** l'étape de chauffage comprend la détection d'au moins une température à l'intérieur de l'enceinte (9) de chauffage pour contrôler le chauffage de ladite enceinte de manière à atteindre une température T2 de réparation inférieure à une température T1 de cuisson du panneau.

4. - Procédé de réparation d'un radôme selon l'une des revendications 1 à 3, **caractérisé en ce qu'**il comprend une étape de brassage de l'air contenu dans ladite enceinte (9).

5. - Procédé de réparation d'un radôme selon l'une des revendications 1 à 4, **caractérisé en ce qu'**il comprend une étape de déploiement d'un joint (12) déployable entre le capot (8) et le panneau (2) permettant la fermeture hermétique de ladite enceinte (9) de réparation.

6. - Procédé de réparation d'un radôme selon l'une des revendications 1 à 5, **caractérisé en ce qu'**il comprend une étape de maintien du capot (8) par la mise en place d'au moins une cale (14) longiligne dont une extrémité prend appui sur la face (13) externe du capot et dont l'autre extrémité prend appui sur une structure fixe.

7. - Procédé de réparation d'un radôme selon l'une des revendications 1 à 6, **caractérisé en ce qu'**il comprend une étape de mise en place de moyens (16) de soutien du panneau (2) pour faciliter l'accès à l'enceinte (9) de chauffage.

8. - Procédé de réparation d'un radôme selon l'une des revendications 1 à 7, **caractérisé en ce qu'**il comprend une étape de mise en place d'une couverture (17) isolante sur au moins une partie de la face externe (5) du panneau (2) de radôme.

9. - Outil de réparation d'un radôme (1) comprenant un panneau (2) présentant une double courbure formant dôme, ledit panneau (2) présentant au moins une zone (7) endommagée **caractérisé en ce que** l'outil comprend le panneau (2) proprement dit, un capot (8) permettant de fermer un espace intérieur du panneau (2) de radôme pour former une enceinte (9), appelée enceinte de réparation, la surface du panneau (2) de radôme formant ladite enceinte de réparation contenant ladite zone (7) endommagée et des moyens (24) de chauffage permettant de chauffer l'espace intérieur de ladite enceinte (9) de réparation formant ainsi une enceinte de chauffage permettant la cuisson attendue pour la réparation de la zone endommagée.

10. - Outil de réparation d'un radôme selon la revendication 9, **caractérisé en ce que** le capot (8) est formé d'un seul bloc et présente une forme dont le contour correspond au contour intérieur du panneau contre lequel il doit s'appliquer, le bord (3) périphérique libre étant extérieur à l'enceinte (9) de chauffage.

11. - Outil de réparation d'un radôme selon l'une des revendication 9 ou 10, **caractérisé en ce que** les moyens de chauffage se présentent sous la forme d'un dispositif (25) de génération d'air chaud susceptible d'être intégré de manière amovible au capot et de le traverser par un orifice (18) prévu à cet effet.

12. - Outil de réparation d'un radôme selon l'une des revendications 9 à 11, **caractérisé en ce qu'**il comprend des moyens (27) de brassage d'air.

13. - Outil de réparation d'un radôme selon l'une des revendications 9 à 12, **caractérisé en ce que** le bord périphérique libre du capot (8) comprend un joint (12) déployable.

14. - Outil de réparation d'un radôme selon l'une des revendications 9 à 13, **caractérisé en ce que** des moyens (10) de détection de température sont prévus à l'intérieur de l'enceinte de réparation, les moyens de détection étant couplés à un centre (11) de commande des moyens (24) de chauffage de l'enceinte de réparation.

15. - Outil de réparation d'un radôme selon l'une des revendications 9 à 14, **caractérisé en ce qu'**il comprend au moins une cale (14) longiligne dont une extrémité prend appui sur la face (13) externe du capot et dont l'autre extrémité prend appui sur une structure fixe.

## Patentansprüche

1. Verfahren zur Reparatur eines Radoms (1), das eine Platte (2) umfasst, die eine Doppelkrümmung aufweist, die eine Kuppel bildet, wobei die Platte mindestens einen beschädigten Bereich (7) aufweist, **dadurch gekennzeichnet, dass** es die folgenden Schritte umfasst:
- Verschließen eines Innenraums der Platte (2) durch eine Abdeckung (8), um eine Einhausung (9) zu bilden, die Reparatureinhausung genannt wird, wobei die Fläche der Platte (2) die Reparatureinhausung (9) bildet, die den beschädigten Bereich (7) enthält;
- Beheizen des Raums innerhalb der Reparatureinhausung (9), wodurch eine Heizeinhausung gebildet wird, die die erwartete Aushärtung für die Reparatur des beschädigten Bereichs gestattet.

2. Verfahren zur Reparatur eines Radoms nach Anspruch 1, **dadurch gekennzeichnet, dass** es einen Schritt des Vorbereitens des beschädigten Bereichs (7) durch Ausschneiden und Einfügen von Ersatzelementen in die vorgenommenen Ausschnitte umfasst, was eine Aushärtung zur Befestigung der Elemente an der Platte (2) erfordert.

3. Verfahren zur Reparatur eines Radoms nach einem der Ansprüche 1 oder 2, **dadurch gekennzeichnet, dass** der Schritt des Beheizens das Erfassen mindestens einer Temperatur innerhalb der Heizeinhausung (9) umfasst, um die Beheizung der Einhausung zu steuern, um eine Reparaturtemperatur T2 unter einer Aushärtungstemperatur T1 der Platte zu erreichen.

4. Verfahren zur Reparatur eines Radoms nach einem der Ansprüche 1 bis 3, **dadurch gekennzeichnet, dass** es einen Schritt des Vermischens der Luft umfasst, die in der Einhausung (9) enthalten ist.

5. Verfahren zur Reparatur eines Radoms nach einem der Ansprüche 1 bis 4, **dadurch gekennzeichnet, dass** es einen Schritt des Ausbringens einer ausbringbaren Dichtung (12) zwischen der Abdeckung (8) und der Platte (2) umfasst, die den hermetischen Verschluss der Reparatureinhausung (9) gestattet.

6. Verfahren zur Reparatur eines Radoms nach einem der Ansprüche 1 bis 5, **dadurch gekennzeichnet, dass** es einen Schritt des Haltens der Abdeckung (8) durch den Einsatz mindestens eines länglichen Keils (14) umfasst, von dem ein Ende auf der Außenfläche (13) der Abdeckung und das andere Ende auf einer festen Struktur aufliegt.

7. Verfahren zur Reparatur eines Radoms nach einem der Ansprüche 1 bis 6, **dadurch gekennzeichnet, dass** es einen Schritt des Einsetzens von Mitteln (16) zum Stützen der Platte (2) umfasst, um den Zugang zur Heizeinhausung (9) zu erleichtern.

8. Verfahren zur Reparatur eines Radoms nach einem der Ansprüche 1 bis 7, **dadurch gekennzeichnet, dass** es einen Schritt des Anbringens einer Isolierdecke (17) auf mindestens einem Abschnitt der Außenfläche (5) der Radomplatte (2) umfasst.

9. Werkzeug zur Reparatur eines Radoms (1), das eine Platte (2) umfasst, die eine Doppelkrümmung aufweist, die eine Kuppel bildet, wobei die Platte (2) mindestens einen beschädigten Bereich (7) aufweist, **dadurch gekennzeichnet, dass** das Werkzeug die eigentliche Platte (2), eine Abdeckung (8), die es gestattet, einen Innenraum der Radomplatte (2) zu verschließen, um eine Einhausung (9) zu bilden, die Reparatureinhausung genannt wird, wobei die Fläche der Radomplatte (2) die Reparatureinhausung bildet, die den beschädigten Bereich (7) enthält, und Heizmittel (24) umfasst, die es gestatten, den Innenraum der Reparatureinhausung (9) zu beheizen, wodurch eine Heizeinhausung gebildet wird, die die erwartete Aushärtung für die Reparatur des beschädigten Bereichs gestattet.

10. Werkzeug zur Reparatur eines Radoms nach Anspruch 9, **dadurch gekennzeichnet, dass** die Abdeckung (8) von einem einzelnen Block gebildet ist und eine Form aufweist, deren Kontur der Innenkontur der Platte entspricht, an der sie anliegen soll, wobei der freie umlaufende Rand (3) außerhalb der Heizeinhausung (9) liegt.

11. Werkzeug zur Reparatur eines Radoms nach einem der Ansprüche 9 oder 10, **dadurch gekennzeichnet, dass** die Heizmittel in Form einer Vorrichtung (25) zur Erzeugung von Heißluft vorliegen, die abnehmbar in die Abdeckung integriert sein und durch eine dafür vorgesehene Öffnung (18) durch sie hindurchgehen kann.

12. Werkzeug zur Reparatur eines Radoms nach einem der Ansprüche 9 bis 11, **dadurch gekennzeichnet, dass** es Mittel (27) zur Luftvermischung umfasst.

13. Werkzeug zur Reparatur eines Radoms nach einem der Ansprüche 9 bis 12, **dadurch gekennzeichnet, dass** der freie umlaufende Rand der Abdeckung (8) eine ausbringbare Dichtung (12) umfasst.

14. Werkzeug zur Reparatur eines Radoms nach einem der Ansprüche 9 bis 13, **dadurch gekennzeichnet, dass** Temperaturerfassungsmittel (10) innerhalb der Reparatureinhausung vorgesehen sind, wobei die Erfassungsmittel an ein Steuerungszentrum (11) der Mittel (24) zum Beheizen der Reparatureinhausung gekoppelt sind.

15. Werkzeug zur Reparatur eines Radoms nach einem der Ansprüche 9 bis 14, **dadurch gekennzeichnet, dass** es mindestens einen länglichen Keil (14) umfasst, von dem ein Ende auf der Außenfläche (13) der Abdeckung und das andere Ende auf einer festen Struktur aufliegt.

## Claims

1. Method for repairing a radome (1) comprising a panel (2) exhibiting a double curvature forming a dome, the said panel comprising at least one damaged zone (7), **characterized in that** it comprises the following steps:
- closing an interior space of the panel (2) using a cap (8) to form a chamber (9), referred to as repair chamber, the surface of the panel (2) forming the said repair chamber (9) containing the said damaged zone (7);
- heating the space inside the said repair chamber (9) thus forming a heating chamber allowing the curing expected for repairing the damaged zone.

2. Method for repairing a radome according to Claim 1, **characterized in that** it comprises a step of preparing the said damaged zone (7) by making cutouts and inserting replacement elements in the cutouts made, requiring curing to fix the said elements to the panel (2).

3. Method for repairing a radome according to one of Claims 1 and 2, **characterized in that** the heating step comprises detecting at least a temperature inside the heating chamber (9) so as to control the heating of the said chamber so as to attain a repair temperature T2 which is lower than a curing temperature T1 of the panel.

4. Method for repairing a radome according to one of Claims 1 to 3, **characterized in that** it comprises a step of agitating the air contained in the said chamber (9).

5. Method for repairing a radome according to one of Claims 1 to 4, **characterized in that** it comprises a step of deploying a deployable seal (12) between the cap (8) and the panel (2) to allow the said repair chamber (9) to be hermetically sealed.

6. Method for repairing a radome according to one of Claims 1 to 5, **characterized in that** it comprises a step of retaining the cap (8) by fitting at least one longilinear spacer (14) one end of which bears against the external face (13) of the cap and the other end of which bears against a fixed structure.

7. Method for repairing a radome according to one of Claims 1 to 6, **characterized in that** it comprises a step of installing means (16) of supporting the panel (2) to facilitate access to the heating chamber (9).

8. Method for repairing a radome according to one of Claims 1 to 7, **characterized in that** it comprises a step of installing an insulating cover (17) on at least part of the external face (5) of the radome panel (2) .

9. Tool for repairing a radome (1) comprising a panel (2) exhibiting a double curvature forming a dome, the said panel (2) having at least one damaged zone (7), **characterized in that** the tool comprises the actual panel (2) itself, a cap (8) allowing a space inside the radome panel (2) to be closed off to form a chamber (9) referred to as a repair chamber, the surface of the radome panel (2) forming the said repair chamber containing the said damaged zone (7), and heating means (24) allowing the heating of the interior space of the said repair chamber (9) thus forming a heating chamber allowing the curing expected for repairing the damaged zone.

10. Tool for repairing a radome according to Claim 9, **characterized in that** the cap (8) is formed as a single unit and has a shape the outline of which corresponds to the interior outline of the panel against which it is to press, the free peripheral edge (3) being outside the heating chamber (9).

11. Tool for repairing a radome according to one of Claims 9 and 10, **characterized in that** the heating means take the form of a hot-air-generating device (25) that can be incorporated removably into the cap and pass through it via an orifice (18) provided for that purpose.

12. Tool for repairing a radome according to one of Claims 9 to 11, **characterized in that** it comprises means (27) for agitating the air.

13. Tool for repairing a radome according to one of Claims 9 to 12, **characterized in that** the free peripheral edge of the cap (8) comprises a deployable seal (12).

14. Tool for repairing a radome according to one of Claims 9 to 13, **characterized in that** temperature detection means (10) are provided inside the repair chamber, the detection means being coupled to a control centre (11) controlling the means (24) of heating the repair chamber.

15. Tool for repairing a radome according to one of Claims 9 to 14, **characterized in that** it comprises at least one longilinear spacer (14) one end of which bears against the external face (13) of the cap and the other end of which bears against a fixed structure.
